# FASCICULE DE BREVET EUROPEEN

(11) **EP 3 991 927 B1**
(45) Date de publication et mention de la délivrance du brevet: **07.02.2024**
(21) Numéro de dépôt: 21200730.6
(22) Date de dépôt: 04.10.2021
(51) Int. Cl.: B25J 15/06

(54) **OUTIL DE PREHENSION ET ROBOT MUNI DUDIT OUTIL**
GREIFWERKZEUG UND MIT EINEM SOLCHEN WERKZEUG AUSGESTATTETER ROBOTER
GRIPPING TOOL AND ROBOT PROVIDED WITH SAID TOOL

(30) Priorité: 29.10.2020 FR 2011085
(43) Date de publication de la demande: 04.05.2022
(73) Titulaire: Airbus Helicopters, 13725 Marignane Cedex (FR)
(72) Inventeur: N'GUYEN, Pascal, 92700 Colombes (FR)
(74) Mandataire: GPI Brevets

(56) Documents cités:
- EP-A1- 3 520 973
- EP-A1- 3 608 720
- EP-A1- 3 610 994
- WO-A1-2017/159986
- DE-U1-202007 002 876
- JP-A- 2011 083 843
- US-A- 2 850 279
- US-A1- 2006 232 085

## Description

La présente invention concerne un outil de préhension et un robot muni d'un tel outil.

L'invention se situe ainsi dans le domaine des outils permettant de déplacer de manière précise et automatisée des éléments rigides ou souples, en particulier des éléments constitutifs d'une structure par exemple d'un aéronef.

En effet, un aéronef peut comporter des structures en matériaux composites, telles qu'une pale, une partie d'un fuselage, une poutre de queue, une paroi, un capot, un ensemble arrière d'hélicoptère par exemple du type connu sous la marque fenestron^{®} ...

Selon un procédé, la fabrication de ces structures peut reposer sur de multiples opérations manuelles. Ces opérations manuelles peuvent être à l'origine d'erreurs humaines, telles que la mauvaise orientation d'une fibre ou d'un tissu ou équivalent, l'introduction d'un corps étranger indu, l'oubli d'un film protecteur ou équivalent... Ces diverses erreurs de fabrication peuvent conduire à la mise au rebut de structures ce qui occasionne une perte de temps et/ou une perte financière.

Par conséquent, pour y remédier, un procédé de fabrication peut être au moins partiellement automatisé.

Ainsi selon un procédé partiellement automatisé de fabrication d'une structure en matériaux composites, des sous-ensembles sont fabriqués avec des machines de découpe. Par exemple, un sous-ensemble comporte un objet préimpregné, une nappe de tissus secs... Les sous-ensembles sont utilisés lors d'opérations manuelles de drapage pour fabriquer des peaux en matériaux composites.

Bien que partiellement automatisé, ce procédé comporte encore des étapes manuelles, notamment pour la fabrication des peaux.

L'automatisation de l'étape de fabrication des peaux est délicate à mettre en oeuvre. Pour automatiser cette étape, il convient en effet de concevoir un robot pouvant se saisir de sous-ensembles souples et/ou pégueux, et de les déposer précisément par exemple dans un moule selon une position et une orientation spécifiques lors d'une phase de drapage.

Usuellement, un robot peut comporter une ou plusieurs ventouses pour saisir un objet et le déplacer. Or, il est difficile pour un robot de saisir et de déplacer de manière reproductible et précise un sous-ensemble pégueux et/ou relativement souple, à savoir susceptible de se déformer localement contrairement à une plaque métallique par exemple. En particulier, utiliser un effecteur muni de ventouses usuelles pour saisir et positionner précisément de manière reproductible un tissu préimprégné dépourvu d'un film protecteur est délicat.

En effet, une ventouse usuelle est parfois dimensionnée pour porter et déposer un élément rigide. Dès lors, une ventouse usuelle peut ne pas présenter une performance de succion optimisée afin d'automatiser une opération de fabrication de peaux en matériaux composites pour la fabrication de structures.

Par exemple, une ventouse usuelle utilisée pour déplacer un sous-ensemble souple peut notamment tendre à déformer localement ce sous-ensemble lors de la préhension ce qui peut engendrer un problème de positionnement du sous-ensemble lors de la dépose.

De plus, un sous-ensemble pégueux est susceptible de coller à une ventouse usuelle.

Le document JP2016217433 A décrit un mécanisme d'adsorption. Ce mécanisme d'adsorption comprend un corps d'adsorption muni d'un film d'adsorption élastiquement déformable pour entrer en contact avec un objet; des moyens d'alimentation en fluide sous pression pour fournir un fluide sous pression; et des moyens de déformation du film d'adsorption pour déformer le film d'adsorption avec le fluide sous pression provenant des moyens d'alimentation en fluide sous pression.

Les documents DE 20 2007 002 876 U1, JP 2011 083843 A, et US 2 850 279 A sont connus. Ces documents présentent des outils de préhension comprenant un corps élastiquement déformable.

Les documents EP 3 610 994 A1 et EP 3 608 720 A1 décrivent aussi de tels outils.

Le document EP 3 520 973 A1 présente un outil selon le préambule de la revendication 1.

La présente invention a alors pour objet de proposer un outil de préhension tel que revendiqué pouvant convenir pour saisir un objet rigide ou souple, collant ou non, tel que par exemple un objet préimpregné.

Ainsi, l'invention vise un outil de préhension comprenant un corps élastiquement déformable formant ventouse, ledit corps comprenant un espace interne configuré pour être en communication fluidique avec un circuit fluidique de génération et d'aspiration de fluide.

Ledit corps comprend une partie haute solidaire d'une partie basse, cette partie basse débouchant sur une lèvre d'étanchéité du corps, ladite partie haute étant élastiquement déformable sous l'effet d'une dépression dans ledit espace interne, ledit outil de préhension comprenant un raidisseur agencé dans le corps en étant disposé à l'intérieur et contre la partie basse, ledit raidisseur étant conformé au moins localement à la partie basse.

L'expression « conformé au moins localement à la partie basse » signifie qu'au moins une portion du raidisseur est conformée à une portion de la partie basse et a donc une forme complémentaire à une forme d'une portion de la partie basse.

Les termes « haute » et « basse » sont à considérer en condition d'utilisation selon un sens en élévation allant de l'objet à saisir et à déplacer vers le corps, la partie haute étant située au dessus de la partie basse.

Au repos, le corps se trouve dans une forme non déformée. Par suite, pour déplacer un objet, éventuellement souple et/ou collant, la lèvre d'étanchéité est posée sur cet objet. Le circuit fluidique de génération et d'aspiration de fluide met en dépression l'espace interne. Il en résulte une déformation du corps et une aspiration de l'objet. Pour déposer l'objet soulevé sur un support, le circuit fluidique de génération et d'aspiration de fluide met à la pression ambiante voire injecte un fluide dans l'espace interne ce qui permet de libérer l'objet. Le corps retrouve alors sa forme non déformée originale.

Lors de la préhension de l'objet à déplacer, le raidisseur notamment permet d'éviter une déformation de la partie basse, d'obtenir une déformation homogène de la partie haute et de lever l'objet en engendrant une déformation minime voire nulle de l'objet.

En effet, en raison de son caractère rigide contrairement à la souplesse du corps et donc de sa partie haute, le raidisseur permet de contrôler la déformation du corps. En particulier, la partie basse du corps n'est pas déformée en étant maintenue en forme par le raidisseur, ce raidisseur étant indéformable dans les conditions d'utilisation. Le raidisseur participe ainsi à l'obtention d'une déformation homogène et reproductible du corps lors de la mise en dépression de l'espace interne. En interdisant la déformation de la partie basse du corps voire en engendrant une circulation homogène du fluide et en guidant la déformation de la partie haute, le raidisseur peut ainsi éviter de déformer indument l'objet à déplacer grâce à une force de succion homogène et reproductible.

Lors de la dépose de l'objet déplacé, la partie basse du corps est toujours maintenue en forme par le raidisseur. Dès lors, la lèvre d'étanchéité peut se retirer de l'objet déplacé de façon homogène en n'engendrant pas une modification géométrique de cet objet déplacé. Cet objet peut alors être déposé précisément à l'endroit voulu.

Par suite, l'outil de préhension selon l'invention comporte un corps formant ventouse qui présente une déformation pilotée et reproductible en raison notamment du raidisseur rigide positionné dans la partie basse du corps. Un tel outil de préhension peut ainsi être utilisé pour soulever un objet aussi bien souple que rigide, et/ou aussi bien collant que non collant. Les dimensions de l'outil de préhension peuvent être adaptées au besoin. A titre d'exemples, un robot muni par exemple de dix huit outils de préhension selon l'invention peut soulever un objet souple et pégueux d'une surface d'un mètre carré et d'une masse de plusieurs dizaines de kilos.

L'outil de préhension peut permettre de transporter divers types de matériaux souples, préimprégnés selon divers niveaux de pégosité mais aussi des nappes et tissus secs sous différentes formes à plat mais aussi à géométrie complexe.

L'outil de préhension peut notamment être utilisé pour déplacer un objet préimpregné dans le cadre d'un procédé de fabrication automatisé d'une structure en matériaux composites. Un tel procédé peut par exemple comporter une étape de déplacement et de positionnement à l'aide de l'invention de sous-ensembles en matériaux composites dans un moule.

L'outil de préhension peut de plus comporter une ou plusieurs des caractéristiques qui suivent, prises seules ou en combinaison.

Selon une caractéristique, le corps peut présenter une dureté comprise entre 60 et 80 dans l'échelle A de dureté Shore.

Par exemple, le corps peut être réalisé à partir de silicone, et/ou peut présenter une dureté de 65 dans cette échelle A de dureté Shore. Une telle dureté permet d'obtenir un matériau dit « médium hard » en langue anglaise, à savoir un matériau suffisamment souple pour être déformé mais suffisamment rigide pour l'application recherchée.

L'épaisseur du corps peut être déterminée par essais et/ou simulations par exemple en fonction de la masse de l'objet à porter et du nombre d'outils de préhension associés pour déplacer cet objet.

Selon une caractéristique compatible avec la précédente, ladite partie haute est déformable sous l'effet d'une dépression dans ledit espace interne en recouvrant une face interne de raidissement dudit raidisseur localement, une face externe de raidissement du raidisseur étant accolée à la partie basse.

Lors d'une phase de mise en dépression de l'espace interne, la partie haute se déforme et se déplace vers la partie basse selon ledit sens et au moins une portion de la partie haute repose en partie sur le raidisseur. Dès lors, le raidisseur permet de contrôler la déformation de la partie haute pour obtenir une déformation reproductible du corps.

Selon une caractéristique compatible avec les précédentes, ledit outil de préhension peut comporter un diffuseur muni d'un tube agencé, par exemple de manière étanche à l'air, dans un tronçon de fixation du corps surmontant ladite partie haute, ledit diffuseur délimitant un passage au moins partiellement ménagé dans ledit tube et en communication fluidique avec ledit espace interne, ledit passage étant configuré pour être en communication fluidique avec ledit circuit fluidique de génération et d'aspiration de fluide.

Le tube permet de maintenir en forme et de rigidifier un tronçon de fixation du corps par lequel le fluide entre ou sort de l'espace interne via le circuit fluidique de génération et d'aspiration de fluide.

De plus, le tube permet de faire circuler ce fluide de manière reproductible.

En effet, le tube peut être indéformable, à savoir dans la limite de conditions d'utilisation prédéterminées.

Par exemple, le tronçon de fixation accueillant le tube est solidaire d'un tronçon haut de diffusion éventuellement tronconique de la partie haute.

Selon une caractéristique compatible avec les précédentes, ledit passage peut comporter un tronçon de sortie tronconique débouchant sur ledit espace interne.

Le tronçon de sortie tronconique permet notamment d'acheminer un fluide dans l'espace interne de façon homogène pour obtenir une libération homogène de l'objet aspiré. Le tronçon de sortie tronconique peut s'évaser selon un sens allant du tube vers la lèvre d'étanchéité.

Selon une caractéristique compatible avec les précédentes, ledit passage peut comporter un tronçon d'entrée taraudé configuré pour coopérer avec ledit circuit fluidique de génération et d'aspiration de fluide.

Ainsi, le circuit fluidique de génération et d'aspiration de fluide peut comprendre un connecteur vissé au tronçon d'entrée taraudé. Selon une caractéristique compatible avec les précédentes, le diffuseur peut prendre la forme d'une pièce monolithique.

Selon un autre exemple, le diffuseur peut comprendre un insert disposé dans le tube, ledit insert comportant ledit tronçon d'entrée taraudé.

Dès lors, une partie du passage comportant ledit tronçon d'entrée taraudé est disposée dans l'insert. Une autre partie du passage comportant un tronçon de sortie, éventuellement tronconique, peut être réalisée dans le tube, et peut être en communication avec la partie du passage comportant ledit tronçon d'entrée taraudé. Selon une caractéristique compatible avec les précédentes, le tube est une pièce moulée, ledit insert étant noyé dans le tube.

Selon l'invention, ledit tube comporte un épaulement présentant une forme complémentaire à une forme d'un tronçon de guidage du raidisseur pour positionner de manière reproductible ledit tube par rapport au raidisseur dans une position aspirée.

Un tel épaulement peut permettre de garantir un bon positionnement du tube. Par exemple, un opérateur peut introduire le tube dans le corps au travers de la lèvre d'étanchéité. L'opérateur pousse alors le tube jusqu'à ce que l'épaulement soit correctement positionné, par exemple en butée contre la partie haute ou le tronçon de fixation. A cet effet, le tube peut être emmanché en force en déformant élastiquement le tronçon de diffusion pour garantir une bonne étanchéité à l'air.

De plus, lorsque le circuit fluidique de génération et d'aspiration de fluide met en dépression l'espace interne, la partie haute se déforme. Cette déformation induit un déplacement du tube vers l'objet à porter. En particulier, l'épaulement est déplacé et pénètre dans le tronçon de guidage du raidisseur. Par exemple, l'épaulement comporte alors uniquement un degré de liberté en translation selon ledit sens par rapport au raidisseur, voire aussi un degré de liberté en rotation autour dudit sens. Le tronçon de guidage permet de garantir un positionnement reproductible du tube dans la position aspirée conditionnant de fait une déformation reproductible de la partie haute.

Le tronçon de guidage peut comprendre une butée favorisant ce déplacement reproductible du tube.

Selon une caractéristique compatible avec les précédentes, ladite partie haute peut comporter un tronçon haut de diffusion tronconique qui s'étend en s'évasant selon un sens d'un sommet haut vers une base de liaison, ladite partie basse comprenant un tronçon bas de diffusion tronconique qui s'étend en s'effilant selon ledit sens de ladite base de liaison vers un sommet bas, ledit raidisseur comprenant un tronçon tronconique de raidissement creux en appui sur le tronçon bas de diffusion tronconique.

Le tronçon tronconique de raidissement permet un déplacement homogène du fluide dans le corps.

Eventuellement, le tronçon bas de diffusion tronconique et le tronçon haut de diffusion tronconique sont symétriques l'un par rapport à l'autre au regard d'un plan passant par la base de liaison.

Eventuellement, ladite partie basse peut comporter un anneau de liaison interposé entre ladite lèvre d'étanchéité et ledit tronçon bas de diffusion tronconique, ledit raidisseur comportant un tronçon d'aspiration disposé contre ledit anneau de liaison.

Le cas échéant, le tronçon d'aspiration forme le tronçon de guidage évoqué précédemment.

Selon un aspect, le raidisseur peut être introduit dans le corps en déformant la partie basse pour sensiblement garantir une étanchéité à l'air entre le raidisseur et la partie basse.

Selon une caractéristique compatible avec les précédentes, ladite lèvre d'étanchéité a une forme tronconique.

Selon une caractéristique compatible avec les précédentes, ledit raidisseur comporte une extrémité munie d'une grille débouchant sur ledit espace d'étanchéité.

Le cas échéant, la grille est portée par ledit tronçon d'aspiration.

Lors de l'aspiration de l'objet à déplacer, par exemple un revêtement souple et/ou pégueux, l'objet peut être plaqué contre la grille. Cette grille vise à garantir l'intégrité de l'objet et à éviter sa déformation par aspiration dans le corps. La grille permet de plus à la fois la circulation de fluide et peut limiter l'interaction avec l'objet. En raison de ces mailles, la grille peut ne pas coller à un objet collant.

La grille et la lèvre d'étanchéité peuvent être dimensionnées par essais et/ou simulations en fonction de la pégosité de l'objet à déplacer.

Si cet objet est pégueux, une lèvre d'étanchéité décrivant une portion de cône de 10 millimètres de diamètre selon une direction orthogonale à l'axe de symétrie de révolution de cette lèvre d'étanchéité peut permettre d'aspirer de manière étanche à l'air cet objet, quelle que soit la nature de cet objet. L'étanchéité peut notamment être assurée en présence d'un revêtement à transporter en tissu préimpregné, quelle que soit l'armature du tissu (taffetas, sergé, satin...) et le pourcentage de résine à transporter.

L'épaisseur de la lèvre d'étanchéité et son angle d'ouverture conique peuvent être optimisés pour ne pas blesser ou dégrader le tissu.

Selon une caractéristique compatible avec les précédentes, ladite grille peut comporter du polyamide, par exemple du nylon, et du polytétrafluoroéthylène. Par exemple, la grille peut comporter du nylon recouvert de polytétrafluoroéthylène.

Une telle grille permet d'obtenir un caractère antiadhésif, notamment utile en présence d'un revêtement à transporter collant.

Par exemple, la grille présente des mailles carrées de deux millimètres de côté. Une telle dimension des ouvertures de la grille permet de conférer à cette grille une surface de contact tendant à éviter une déformation du revêtement transporté sous l'effet des pressions et dépressions générées.

Indépendamment de sa réalisation, un outil de préhension selon l'invention peut être appliqué manuellement sur un revêtement.

Cependant l'invention vise aussi un robot muni d'un effecteur mobile. Cet effecteur comporte alors au moins un outil de préhension selon l'invention, ledit robot comportant ledit circuit fluidique de génération et d'aspiration de fluide relié fluidiquement audit espace interne du ou des outils de préhension.

Dans ce cas, l'effecteur du robot est conçu pour optimiser le positionnement de l'objet à déplacer, le nombre d'outils de préhension étant déterminé pour permettre de transporter un objet sans engendrer une déformation de cet objet lors de son déplacement, voire pour permettre de l'insérer dans un moule par exemple.

Le positionnement et le nombre d'outils de préhension peuvent être optimisés selon la complexité de la forme de l'objet à déplacer et à positionner. L'architecture de chaque outil de préhension peut être optimisée pour rendre plus performante le déplacement d'objets lors d'opérations répétitives.

L'invention et ses avantages apparaîtront avec plus de détails dans le cadre de la description qui suit avec des exemples donnés à titre illustratif en référence aux figures annexées qui représentent :
la figure 1, une vue schématique d'un robot comprenant au moins un outil de préhension selon l'invention,
la figure 2, une vue en perspective d'un corps d'un outil de préhension selon l'invention,
la figure 3, une vue en perspective d'un raidisseur d'un outil de préhension selon l'invention,
la figure 4, une vue en perspective d'un diffuseur d'un outil de préhension selon l'invention,
la figure 5, une vue explicitant le fonctionnement d'un outil de préhension selon l'invention et montrant une étape de positionnement de l'outil de préhension,
la figure 6, une vue explicitant le fonctionnement d'un outil de préhension selon l'invention et montrant une étape de saisie d'un objet avec l'outil de préhension,
la figure 7, une vue explicitant le fonctionnement d'un outil de préhension selon l'invention et montrant une étape de dépose de l'objet, et
la figure 8, une vue explicitant le fonctionnement d'un outil de préhension selon l'invention et montrant une étape de retour au repos de l'outil de préhension.

Les éléments présents dans plusieurs figures distinctes sont affectés d'une seule et même référence.

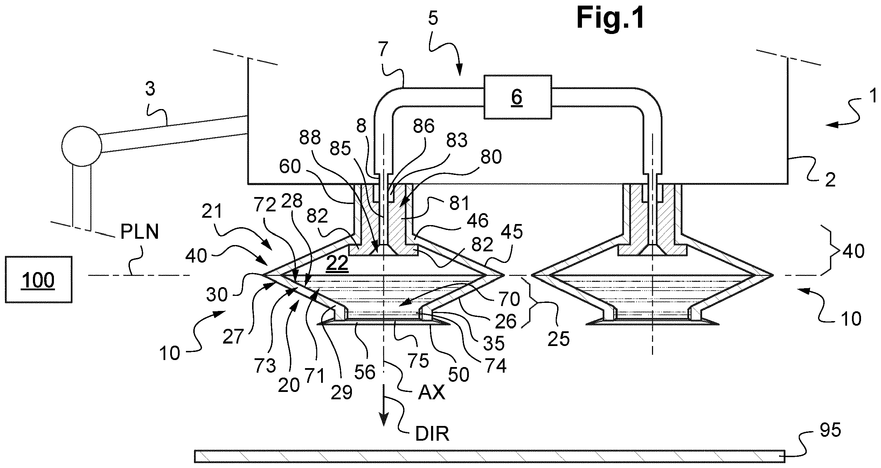

La figure 1 présente un outil de préhension 10 selon l'invention coopérant avec un circuit 5 fluidique de génération et d'aspiration de fluide. Un tel circuit 5 fluidique de génération et d'aspiration de fluide peut comprendre un organe de mise en déplacement 6, motorisé ou manuel, apte à faire circuler un fluide, de l'air par exemple, par exemple vers l'outil de préhension 10 et à aspirer ce fluide à partir de l'outil de préhension 10. Un tel organe 6 peut comprendre une pompe réversible, un piston mobile manuellement... Par exemple, le circuit 5 fluidique de génération et d'aspiration de fluide peut comprendre une liaison fluidique 7, comprenant au moins un tuyau en communication fluidique avec l'organe de mise en déplacement 6 ainsi qu'un connecteur fluidique 8. Par exemple, ce connecteur 8 peut être vissé à l'outil de préhension 10.

Selon l'exemple de la figure 1 donné à titre illustratif, au moins un outil de préhension 10 peut être porté par un effecteur 2 mobile d'un robot 1. L'effecteur 2 représente un portant rendu mobile par des moyens de déplacement 3 du robot 1. Selon l'exemple illustré, ces moyens de déplacement 3 peuvent comprendre un bras articulé 3. Alternativement, des moyens de déplacement usuels peuvent être utilisés, tels que par exemple des chariots mobiles sur des rails ou autres.

Par ailleurs, le robot 1 peut comprendre un contrôleur 100 usuel pour piloter l'effecteur 2 et/ou le circuit 5 fluidique de génération et d'aspiration de fluide. Le contrôleur 100 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Selon un autre aspect, au moins une partie de ce circuit 5 fluidique de génération et d'aspiration de fluide peut être solidarisée à l'effecteur 2.

Selon une réalisation non illustrée, l'outil de préhension 10 peut être déplacé manuellement.

Indépendamment de son agencement, un outil de préhension 10 selon l'invention comporte un corps 20 formant ventouse et un raidisseur 70, voire un diffuseur 80.

Le corps 20 est élastiquement déformable dans des conditions prédéterminées d'utilisation. A cet effet, le corps 20 peut présenter une dureté comprise entre 60 et 80 dans l'échelle A de dureté Shore, et notamment de 65. L'épaisseur du corps 20 peut être fonction de la masse de l'objet à transporter et du nombre d'outils de préhension 10 utilisés simultanément pour transporter l'objet.

Par ailleurs, le corps 20 délimite un espace interne 22. Cet espace interne 22 est en communication fluidique avec le circuit 5 fluidique de génération et d'aspiration de fluide. Ainsi, le circuit 5 fluidique de génération et d'aspiration de fluide peut éventuellement injecter de l'air, par exemple, dans l'espace interne 22 et peut aussi aspirer de l'air à partir de cet espace interne 22.

Selon un autre aspect, le corps 20 comporte diverses parties, au regard d'un axe AX comprenant un sens DIR allant du haut vers le bas, et notamment de l'outil de préhension 10 vers un objet 95 à déplacer en utilisation. Selon une possibilité, l'axe AX est un axe de symétrie de révolution au moins du corps 20.

Ainsi, le corps 20 comprend une section 21, partiellement déformable en utilisation, qui est munie d'une partie basse 25. La partie basse 25 peut être surmontée d'une partie haute 40 de la section 21 et peut être située au-dessus d'une lèvre d'étanchéité 50. Le terme « surmontée » et l'expression « située au dessus » sont à apprécier, au regard de l'axe AX et lorsque le corps 20 est au dessus d'un objet à porter.

La partie haute 40 est prolongée par ladite partie basse 25 vers le bas, cette partie basse 25 étant prolongée vers le bas par la lèvre d'étanchéité 50.

Par exemple, la partie haute 40 a un tronçon qui s'évase en se rapprochant de la partie basse 25 alors que la partie basse 25 a un tronçon qui s'effile en s'éloignant de la partie haute 40.

La partie haute 40 peut comporter un tronçon dénommé par commodité tronçon haut de diffusion tronconique 45. Le tronçon haut de diffusion tronconique 45 s'étend selon le sens DIR d'un sommet haut 46 vers une base de liaison 30. Le sommet haut 46 et la base de liaison 30 sont éventuellement chacun de forme annulaire, le sommet haut 46 comprenant une face décrivant un cercle d'un diamètre inférieur à un diamètre d'un cercle décrit par une face de la base de liaison 30.

Par ailleurs, le corps 20 peut comprendre un tronçon de fixation 60 qui s'étend en élévation, à savoir selon un sens contraire au sens DIR à partir du sommet haut 46. Par exemple, le tronçon de fixation 60 est un cylindre à base circulaire surmontant le tronçon haut de diffusion tronconique 45.

Indépendamment de cet aspect, la partie basse 25 peut comporter un tronçon dénommé par commodité tronçon bas de diffusion tronconique 26. Le tronçon bas de diffusion tronconique 26 s'étend selon le sens DIR de la base de liaison 30 vers un sommet bas 29. Le sommet bas 29 et la base de liaison 30 sont éventuellement chacun de forme annulaire, le sommet bas 29 comprenant une face décrivant un cercle d'un diamètre inférieur à un diamètre d'un cercle décrit par une face de la base de liaison 30. Le tronçon bas de diffusion tronconique 26 comporte une face externe de diffusion 27 au regard d'un milieu extérieur à l'outil de préhension 10. A l'opposé de la face externe de diffusion 27, le tronçon bas de diffusion tronconique 26 comporte une face interne de diffusion 28 au regard de l'espace interne 22.

Par ailleurs, la lèvre d'étanchéité 50 peut prolonger le sommet bas 29 selon le sens DIR directement ou indirectement selon la variante illustrée via un anneau de liaison 35. Ainsi, l'anneau de liaison 35 s'étend le cas échéant du sommet bas 29 jusqu'à la lèvre d'étanchéité 50. Par exemple, l'anneau de liaison 35 est un cylindre à base circulaire surmonté par le tronçon bas de diffusion tronconique 26 et surmontant la lèvre d'étanchéité 50.

La lèvre d'étanchéité 50 délimite radialement, au regard de l'axe AX, un espace dénommé espace d'étanchéité 56 par commodité.

Par exemple, la lèvre d'étanchéité 50 a une forme tronconique qui s'évase en s'éloignant de la partie basse 25.

Le cas échéant, le tronçon haut de diffusion tronconique 45 et le tronçon bas de diffusion tronconique 26 sont éventuellement symétriques l'un par l'autre par rapport à un plan PLN orthogonal à l'axe AX. Le tronçon haut de diffusion tronconique 45 et le tronçon bas de diffusion tronconique 26 peuvent avoir conjointement une forme en <> en coupe selon un plan orthogonal au plan PLN et contenant ledit axe AX.

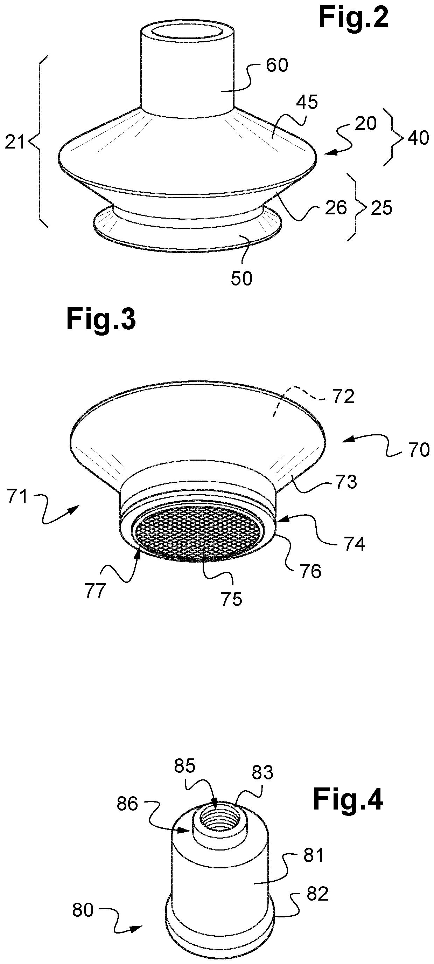

La figure 2 illustre un tel corps 20 en perspective.

Indépendamment de cet aspect et en référence à la figure 1, l'outil de préhension 10 peut comporter un diffuseur 80 servant d'interface entre le corps 20 et le circuit 5 fluidique de génération et d'aspiration de fluide.

Ce diffuseur est muni d'un tube 81 agencé voire enfoncé, par exemple de manière étanche à l'air, dans le tronçon de fixation 60. Le tube 81 peut être enfoncé en force en déformant par exemple le tronçon de fixation 60.

Ce tube 81 présente un épaulement 82 en saillie radialement vers l'espace interne 22 au regard de l'axe AX. Lorsque le tube 81 est correctement positionné, l'épaulement 82 est en butée dans l'espace interne 22 contre le corps 20, et par exemple contre le sommet haut 46 de la partie haute 40. L'épaulement reste en dehors du tronçon de fixation 60.

En outre, le tube et ledit épaulement sont conformés à un tronçon de guidage du raidisseur afin de pouvoir pénétrer dans ce tronçon de guidage de manière reproductible.

Selon un autre aspect compatible avec les précédents, l'axe AX peut être un axe de symétrie de révolution du diffuseur 80.

Selon un autre aspect compatible avec les précédents, le diffuseur 80 délimite un passage 85. Ce passage 85 traverse de part en part le diffuseur 80, par exemple selon l'axe AX, pour mettre en communication fluidique l'espace interne 22 et le circuit 5 fluidique de génération et d'aspiration de fluide.

Ainsi, le passage 85 comporte un tronçon de sortie 87, par exemple tronconique, qui débouche sur l'espace interne 22 au niveau de la partie haute 40.

A l'inverse, le passage 85 comporte un tronçon d'entrée 86 qui débouche sur le circuit 5 fluidique de génération et d'aspiration de fluide. Par exemple, le tronçon d'entrée 86 comporte un filetage, réalisé éventuellement par une opération de taraudage, pour être vissé à un connecteur 8 du circuit 5 fluidique de génération et d'aspiration de fluide.

Eventuellement, un tronçon de liaison 88 du passage 85 peut relier fluidiquement le tronçon d'entrée 86 au tronçon de sortie 87.

Ce passage 85 peut être au moins partiellement ménagé dans le tube 81, voire dans au moins un insert 83.

Par exemple, le tronçon d'entrée 86 peut être ménagé dans un insert 83 inséré dans le tube. Le tronçon de sortie 87, voire le cas échéant le tronçon de liaison 88, peuvent être ménagés dans le tube 81.

La figure 4 illustre un tel diffuseur 80 en perspective.

Indépendamment de cet aspect et en référence à la figure 1, l'outil de préhension 10 comporte un raidisseur 70, indéformable dans les conditions d'utilisation prédéterminées, du moins dans le respect des conditions d'utilisation de l'outil de préhension 10.

Le raidisseur 70 est agencé dans la partie basse 25. En particulier, le raidisseur 70 est conformé en tout ou partie à la partie basse 25 pour empêcher la déformation de cette partie basse 25 et pour rendre étanche à l'air l'interface entre la partie basse 25 et le raidisseur 70. A l'inverse, le raidisseur 70 ne raidit pas la partie haute 40. Cette partie haute 40 reste donc déformable notamment sous l'effet d'une dépression dans l'espace interne 22 en recouvrant ledit raidisseur 70 localement comme décrit par la suite.

Ainsi de haut en bas selon le sens DIR, le corps 20 peut comprendre successivement le tronçon de fixation 60 rendu indéformable par le diffuseur 80, le tronçon haut de diffusion tronconique 45, le tronçon bas de diffusion tronconique 26 rendu indéformable par le raidisseur 70, le cas échéant l'anneau de liaison 35 rendu indéformable par le raidisseur 70 et enfin la lèvre d'étanchéité 50.

Selon un autre aspect, en raison de la souplesse du corps 20, le raidisseur 70 peut être introduit dans le corps 20 par la lèvre d'étanchéité 50 par exemple. Le raidisseur 70 peut être un organe rigide obtenu par moulage ou par impression 3D par exemple.

Salon un autre aspect compatible avec le précédent, l'axe AX peut être un axe de symétrie de révolution du raidisseur 70.

Le raidisseur 70 est creux et délimite localement une partie de l'espace interne 22 en communication fluidique avec l'espace d'étanchéité 56. Par exemple, le raidisseur 70 comprend un tronçon tronconique de raidissement 71 creux en appui sur le tronçon bas de diffusion tronconique 26. Plus précisément, le tronçon tronconique de raidissement 71 comporte une face interne de raidissement 72 au regard de l'espace interne 22 au repos et une face externe de raidissement 73 qui est accolée contre la face interne de diffusion 28.

Eventuellement, le tronçon tronconique de raidissement 71 s'effile en direction de la lèvre d'étanchéité 50 et peut être prolongé par un tronçon d'aspiration 74 disposé contre l'anneau de liaison 35 éventuellement radialement au regard de l'axe AX. A l'instar de l'anneau de liaison 35, le tronçon d'aspiration 74 peut comprendre un cylindre à base circulaire. Par ailleurs, le tronçon d'aspiration 74 peut former un tronçon de guidage coopérant avec le tube. Eventuellement, le tronçon d'aspiration 74 peut comprendre une butée pour limiter le déplacement du tube, telle qu'une protubérance ou un anneau.

Eventuellement, l'anneau de liaison 35 peut aussi comprendre une collerette 76 pouvant être en appui selon l'axe AX contre une extrémité de l'anneau de liaison 35.

Selon un aspect compatible avec les précédents, une grille 75 peut être agencée à une extrémité 77 du raidisseur 70, par exemple au niveau de ladite collerette 76. La grille 75 débouche sur l'espace d'étanchéité 56.

Une telle grille 75 peut par exemple comprendre du polyamide recouvert de polytétrafluoroéthylène.

La figure 3 présente une vue d'un raidisseur 70 équipé d'une grille 75.

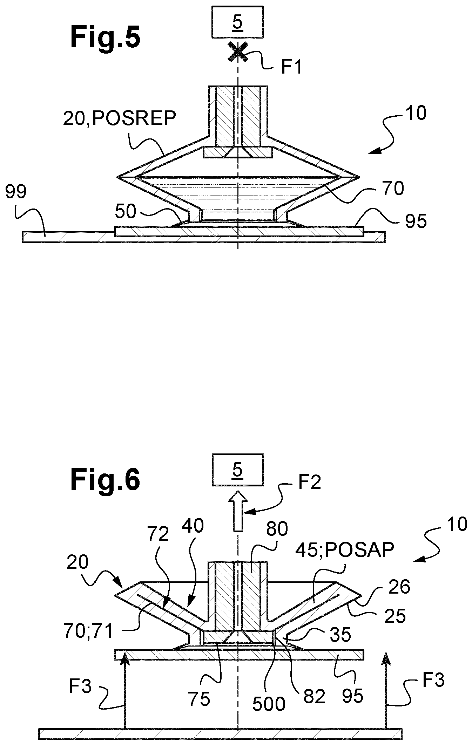

Les figures 5 à 8 illustrent un procédé de déplacement d'un objet 95 reposant sur un support d'origine 98, avec un outil de préhension 10 selon l'invention.

En référence à la figure 5, durant une étape de positionnement, l'outil de positionnement 10 est dans une position dite position au repos POSREP. Le circuit 5 fluidique de génération et d'aspiration de fluide n'injecte pas un fluide dans l'outil de préhension 10 et n'aspire pas un tel fluide dans cet outil de préhension 10 comme le schématise la croix F1.

L'outil de préhension 10 est approché de l'objet 95, la lèvre d'étanchéité 50 étant posée manuellement ou via un robot sur l'objet 95.

En référence à la figure 6 et durant une étape de saisie, le circuit 5 fluidique de génération et d'aspiration de fluide aspire le fluide contenu dans l'outil de préhension 10, par exemple pendant une seconde comme le schématise la flèche F2. Par exemple, le fluide est aspiré à une pression allant de moins 1 bar à moins 3 bars, voire moins, en fonction de la masse de l'objet. Le fluide est aspiré de manière homogène via le diffuseur 80. La partie basse 25 du corps 20 ne se déforme pas en raison de la présence du raidisseur 70. Par contre, la dépression créée induit la déformation de la partie haute 40 et en particulier du tronçon haut de diffusion tronconique 45. Ce tronçon haut de diffusion tronconique 45 se déforme et une face du tronçon haut de diffusion tronconique 45 vient reposer localement sur la face externe de raidissement 73 du raidisseur 70. De plus, l'épaulement 82 du tube 81 est positionné dans le tronçon d'aspiration 74 du raidisseur. Ce tronçon d'aspiration force le tube à atteindre la position prévue et illustrée, en raison de leurs formes complémentaires et par interférence de formes. Ce raidisseur 70 permet donc de déformer de manière reproductible le corps 20 par le biais de la déformation contrôlée de la partie haute et le positionnement du tube dans le tronçon d'aspiration. L'outil de préhension 10 se trouve dans une position aspirée POSAP.

De plus, la dépression créée permet à l'outil de préhension 10 de fonctionner en mode ventouse, la lèvre d'étanchéité 50 liant de manière étanche l'objet 95 à l'outil de préhension 10. L'objet 95 est soulevé selon les flèches F3. La grille 75 empêche l'aspiration de l'objet 95 dans la partie basse 25 en présence d'un objet 95 souple et/ou, l'adhésion de l'objet 95 en présence d'un objet 95 collant. L'outil de préhension 10 ne déforme donc pas l'objet 95.

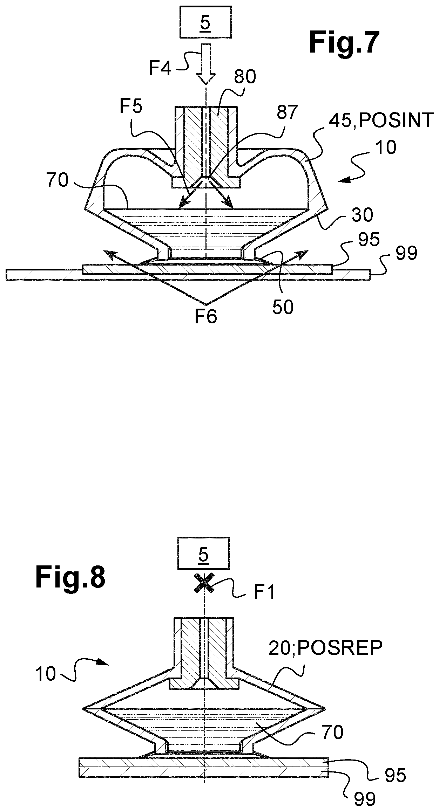

En référence à la figure 7, l'objet 95 peut alors être déplacé au dessus d'un support de destination 99, favorablement très près de ce support de destination 99.

Durant une étape de dépose, le circuit 5 fluidique de génération et d'aspiration de fluide peut injecter un fluide dans l'outil de préhension 10, comme le schématise la flèche F4. Par exemple, le fluide est injecté à une pression de l'ordre 0.7 bar par exemple. Le fluide est injecté de manière homogène via le diffuseur 80 selon les flèches F5. La partie basse 25 du corps 20 ne se déforme pas en raison de la présence du raidisseur 70. Par contre, le fluide injecté tend à gonfler la partie haute 40 et en particulier le tronçon haut de diffusion tronconique 45. L'outil de préhension 10 se trouve dans une position intermédiaire POSINT. De plus, le fluide s'échappe de l'espace interne 22 de manière homogène via la lèvre d'étanchéité 50 selon les flèches F5. La forme du raidisseur et de la lèvre d'étanchéité 50 tend à générer cet échappement homogène du fluide par la lèvre d'étanchéité 50. L'objet 95 est alors désolidarisé de l'outil de préhension 10 et repose délicatement sur le support de destination 99.

Il peut exister une relation pouvant être déterminée par des essais de réglage entre les niveaux de pression et dépression à appliquer lors de ce procédé, pour éviter d'introduire des défauts et des marquages sur l'objet à déplacer.

A l'issue du procédé et durant une étape de retour au repos illustrée sur la figure 8, le circuit 5 fluidique de génération et d'aspiration de fluide n'injecte pas un fluide dans l'outil de préhension 10 et n'aspire pas un tel fluide dans cet outil de préhension 10 comme le schématise à nouveau la croix F1. L'outil de préhension 10 retourne alors dans sa position au repos POSREP.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent dans le cadre de la présente invention défini par les revendications.

## Revendications

1. Outil de préhension (10) comprenant un corps (20) élastiquement déformable formant ventouse, ledit corps (20) comprenant un espace interne (22) configuré pour être en communication fluidique avec un circuit (5) fluidique de génération et d'aspiration de fluide, ledit corps (20) comprenant une partie haute (40) solidaire d'une partie basse (25), ladite partie basse débouchant sur une lèvre d'étanchéité (50) dudit corps (20), ladite partie haute (40) étant élastiquement déformable sous l'effet d'une dépression dans ledit espace interne (22), ledit outil de préhension (10) comprenant un raidisseur (70) agencé dans ledit corps (20) en étant disposé à l'intérieur et contre ladite partie basse (25), ledit raidisseur (70) étant conformé au moins localement à ladite partie basse (25), ledit outil de préhension (10) comportant un diffuseur (80) muni d'un tube (81) agencé dans un tronçon de fixation (60) dudit corps (20) surmontant ladite partie haute (40), ledit diffuseur (80) délimitant un passage (85) au moins partiellement ménagé dans ledit tube (81) et en communication fluidique avec ledit espace interne (22), ledit passage (85) étant configuré pour être en communication fluidique avec ledit circuit (5) fluidique de génération et d'aspiration de fluide, ledit passage (85) comporte un tronçon de sortie tronconique (87) débouchant sur ledit espace interne (22),
**caractérisé en ce que** ledit tube (81) comporte un épaulement (82), ledit épaulement (82) présentant une forme complémentaire à une forme d'un tronçon de guidage (74) du raidisseur (70) pour positionner de manière reproductible ledit tube dans le tronçon de guidage (74) par rapport au raidisseur dans une position aspirée (POSAP).

2. Outil de préhension selon la revendication 1,
**caractérisé en ce que** ledit corps (20) présente une dureté comprise entre 60 et 80 dans l'échelle A de dureté Shore.

3. Outil de préhension selon l'une quelconque des revendications 1 à 2,
**caractérisé en ce que** ladite partie haute (40) est déformable sous l'effet d'une dépression dans ledit espace interne (22) en recouvrant une face interne de raidissement (72) dudit raidisseur (70) localement, une face externe de raidissement (73) du raidisseur (70) étant accolée à la partie basse (25).

4. Outil de préhension selon l'une quelconque des revendications 1 à 3,
**caractérisé en ce que** ledit passage (85) comporte un tronçon d'entrée (86) taraudé configuré pour coopérer avec ledit circuit (5) fluidique de génération et d'aspiration de fluide.

5. Outil de préhension selon la revendication 4,
**caractérisé en ce que** ledit diffuseur (80) comporte un insert (83) disposé dans ledit tube (81), ledit insert (83) comportant ledit tronçon d'entrée (86) taraudé.

6. Outil de préhension selon l'une quelconque des revendications 1 à 5,
**caractérisé en ce que** ladite partie haute (40) comporte un tronçon haut de diffusion tronconique (45) qui s'étend en s'évasant selon un sens (DIR) d'un sommet haut (46) vers une base de liaison (30), ladite partie basse (25) comprenant un tronçon bas de diffusion tronconique (26) qui s'étend en s'effilant selon ledit sens (DIR) de ladite base de liaison (30) vers un sommet bas (29), ledit raidisseur (70) comprenant un tronçon tronconique de raidissement (71) creux en appui sur le tronçon bas de diffusion tronconique (26).

7. Outil de préhension selon la revendication 6,
**caractérisé en ce que** ladite partie basse (25) comporte un anneau de liaison (35) interposé entre ladite lèvre d'étanchéité (50) et ledit tronçon bas de diffusion tronconique (26), ledit raidisseur (70) comportant un tronçon d'aspiration (74) disposé contre ledit anneau de liaison (35).

8. Outil de préhension selon l'une quelconque des revendications 1 à 7,
**caractérisé en ce que** ladite lèvre d'étanchéité (50) a une forme tronconique.

9. Outil de préhension selon l'une quelconque des revendications 1 à 8,
**caractérisé en ce que** ledit raidisseur (70) comporte une extrémité (77) munie d'une grille (75) débouchant sur ledit espace d'étanchéité (56).

10. Outil de préhension selon la revendication 9,
**caractérisé en ce que** ladite grille (75) comporte du polyamide recouvert de polytétrafluoroéthylène.

11. Robot (1) muni d'un effecteur (2) mobile,
**caractérisé en ce que** ledit effecteur (2) comporte au moins un outil de préhension (10) selon l'une quelconque des revendications 1 à 10
, ledit robot (1) comportant ledit circuit (5) fluidique de génération et d'aspiration de fluide relié fluidiquement audit espace interne (22).

## Patentansprüche

1. Greifwerkzeug (10) mit einem einen Saugnapf bildenden, elastisch verformbaren Körper (20), wobei der Körper (20) einen Innenraum (22) aufweist, der konfiguriert ist, um in Fluidverbindung mit einem Fluidkreis (5) zum Abgeben und Ansaugen von Fluid zu sein, wobei der Körper (20) einen oberen Teil (40) aufweist, der mit einem unteren Teil (25) fest verbunden ist, wobei der untere Teil in eine Dichtlippe (50) des Körpers (20) mündet, wobei der obere Teil (40) unter der Wirkung eines Unterdrucks in dem Innenraum (22) elastisch verformbar ist, wobei das Greifwerkzeug (10) eine Versteifung (70) umfasst, die in dem Körper (20) angeordnet ist, indem sie im Inneren und an dem unteren Teil (25) angeordnet ist, wobei die Versteifung (70) zumindest lokal an den unteren Teil (25) formangepasst ist, wobei das Greifwerkzeug (10) einen Diffusor (80) umfasst, der mit einem Rohr (81) versehen ist, das in einem Befestigungsabschnitt (60) des Körpers (20) angeordnet ist, der den oberen Teil (40) überragt, wobei der Diffusor (80) einen Durchgang (85) begrenzt, der zumindest teilweise in dem Rohr (81) ausgebildet ist und in Fluidverbindung mit dem Innenraum (22) steht, wobei der Durchgang (85) konfiguriert ist, um in Fluidverbindung mit dem Fluidkreis (5) zum Abgeben und Ansaugen von Fluid zu sein, wobei der Durchgang (85) einen konischen Ausgangsabschnitt (87) aufweist, der in den Innenraum (22) mündet,
**dadurch gekennzeichnet, dass** das Rohr (81) eine Schulter (82) aufweist, wobei die Schulter (82) eine Form aufweist, die komplementär zu einer Form eines Führungsabschnitts (74) der Versteifung (70) ist, um in einer Ansaugposition (POSAP) das Rohr in dem Führungsabschnitt (74) in Bezug auf die Versteifung reproduzierbar zu positionieren.

2. Greifwerkzeug nach Anspruch 1,
**dadurch gekennzeichnet, dass** der Körper (20) eine Härte zwischen 60 und 80 auf der Shore-Härteskala A aufweist.

3. Greifwerkzeug nach einem der Ansprüche 1 bis 2,
**dadurch gekennzeichnet, dass** der obere Teil (40) unter der Wirkung eines Unterdrucks in dem Innenraum (22) so verformbar ist, dass er eine Versteifungsinnenseite (72) der Versteifung (70) lokal bedeckt, wobei eine Versteifungsaußenseite (73) der Versteifung (70) an den unteren Teil (25) angefügt ist.

4. Greifwerkzeug nach einem der Ansprüche 1 bis 3,
**dadurch gekennzeichnet, dass** der Durchgang (85) einen Einlassabschnitt (86) mit Innengewinde aufweist, der konfiguriert ist, um mit dem Fluidkreislauf (5) zum Abgeben und Ansaugen von Fluid zusammenzuwirken.

5. Greifwerkzeug nach Anspruch 4,
**dadurch gekennzeichnet, dass** der Diffusor (80) einen in dem Rohr (81) angeordneten Einsatz (83) aufweist, wobei der Einsatz (83) den Einlassabschnitt (86) mit Innengewinde umfasst.

6. Greifwerkzeug nach einem der Ansprüche 1 bis 5,
**dadurch gekennzeichnet, dass** der obere Teil (40) einen konischen oberen Diffusionsabschnitt (45) umfasst, der sich in einer Richtung (DIR) von einem oberen Scheitelpunkt (46) zu einer Verbindungsbasis (30) hin aufweitend erstreckt, dass der untere Teil (25) einen unteren konischen Diffusionsabschnitt (26) umfasst, der sich in der Richtung (DIR) von der Verbindungsbasis (30) zu einem unteren Scheitel (29) verjüngend erstreckt, und dass die Versteifung (70) einen hohlen konischen Versteifungsabschnitt (71) umfasst, der an dem unteren konischen Diffusionsabschnitt (26) anliegt.

7. Greifwerkzeug nach Anspruch 6,
**dadurch gekennzeichnet, dass** der untere Teil (25) einen Verbindungsring (35) aufweist, der zwischen der Dichtlippe (50) und dem unteren konischen Diffusionsabschnitt (26) angeordnet ist, und dass die Versteifung (70) einen Ansaugabschnitt (74) aufweist, der an dem Verbindungsring (35) angeordnet ist.

8. Greifwerkzeug nach einem der Ansprüche 1 bis 7,
**dadurch gekennzeichnet, dass** die Dichtlippe (50) eine konische Form aufweist.

9. Greifwerkzeug nach einem der Ansprüche 1 bis 8,
**dadurch gekennzeichnet, dass** die Versteifung (70) ein Ende (77) aufweist, das mit einem Gitter (75) versehen ist, das in den Dichtraum (56) mündet.

10. Greifwerkzeug nach Anspruch 9,
**dadurch gekennzeichnet, dass** das Gitter (75) mit Polytetrafluorethylen beschichtetes Polyamid umfasst.

11. Roboter (1) mit einem beweglichen Effektor (2),
**dadurch gekennzeichnet, dass** der Effektor (2) mindestens ein Greifwerkzeug (10) nach einem der Ansprüche 1 bis 10 umfasst, wobei der Roboter (1) den mit dem Innenraum (22) fluidisch verbundenen Fluidkreis (5) zum Abgeben und Ansaugen von Fluid umfasst.

## Claims

1. Gripping tool (10) comprising an elastically deformable body (20) forming a suction cup, said body (20) comprising an internal space (22) configured to be in fluid communication with a fluid circuit (5) for the generation and aspiration of fluid, said body (20) comprising an upper part (40) integral with a lower part (25), said lower part opening on to a sealing lip (50) of said body (20), said upper part (40) being elastically deformable under the effect of a vacuum in said internal space (22), said gripping tool (10) comprising a stiffener (70) arranged in said body (20) being arranged inside and against said lower part (25), said stiffener (70) being shaped at least locally to said lower part (25), said gripping tool (10) comprising a diffuser (80) provided with a tube (81) arranged in an attachment section (60) of said body (20) surmounting said upper part (40), said diffuser (80) delimiting a passage (85) at least partially formed in said tube (81) and in fluid communication with said internal space (22), said passage (85) being configured to be in fluid communication with said fluid circuit (5) for the generation and aspiration of fluid, said passage (85) comprising a tapered outlet section (87) opening on to said internal space (22).
**characterised in that** said tube (81) comprises a shoulder (82), said shoulder (82) having a shape complementary to a shape of a guide section (74) of the stiffener (70) in order to position said tube in a reproducible manner in said guide section (74) relative to the stiffener in an aspirated position (POSAP).

2. Gripping tool according to claim 1,
**characterised in that** said body (20) has a hardness of between 60 and 80 on the Shore A hardness scale.

3. Gripping tool according to any one of claims 1 to 2,
**characterised in that** said upper part (40) is deformable under the effect of a vacuum in said internal space (22) by covering an internal stiffening face (72) of said stiffener (70) locally, an external stiffening face (73) of the stiffener (70) being attached to the lower part (25).

4. Gripping tool according to any one of claims 1 to 6,
**characterised in that** said passage (85) comprises a threaded inlet section (86) configured to cooperate with said fluid circuit (5) for the generation and aspiration of fluid.

5. Gripping tool according to claim 4,
**characterised in that** said diffuser (80) comprises an insert (83) arranged in said tube (81), said insert (83) comprising said threaded inlet section (86).

6. Gripping tool according to any one of claims 1 to 6,
**characterised in that** said upper part (40) comprises a frustoconical upper diffusion section (45) which extends while widening in one direction (DIR) from a high top (46) towards a connecting base (30), said lower part (25) comprising a lower tapered diffusion section (26) which extends while tapering in said direction (DIR) of said connecting base (30) towards a low top (29), said stiffener (70) comprising a hollow frustoconical stiffening section (71) resting on the lower frustoconical diffusion section (26).

7. Gripping tool according to claim 6,
**characterised in that** said lower part (25) comprises a connecting ring (35) interposed between said sealing lip (50) and said lower tapered diffusion section (26), said stiffener (70) comprising an aspiration section (74) arranged against said connecting ring (35).

8. Gripping tool according to any one of claims 1 to 7,
**characterised in that** said sealing lip (50) has a frustoconical shape.

9. Gripping tool according to any one of claims 1 to 8,
**characterised in that** said stiffener (70) has one end (77) provided with a grille (75) opening on to said sealing space (56).

10. Gripping tool according to claim 9,
**characterised in that** said grille (75) comprises polyamide coated with polytetrafluoroethylene.

11. Robot (1) provided with a mobile effector (2),
**characterised in that** said effector (2) comprises at least one gripping tool (10) according to any one of claims 1 to 11, said robot (1) comprising said fluid circuit (5) for the generation and aspiration of fluid connected fluidly to said internal space (22).
